# EUROPEAN PATENT SPECIFICATION

(11) **EP 2 071 495 B1**
(45) Date of publication and mention of the grant of the patent: **30.11.2011**
(21) Application number: 08704248.7
(22) Date of filing: 31.01.2008
(51) Int. Cl.: G06K 19/07, G06K 19/00, H01Q 1/38, H01Q 5/00, H01Q 7/00, H01Q 9/27, H01Q 21/30, H04B 5/02

(54) **WIRELESS IC DEVICE**
DRAHTLOSES GERÄT MIT INTEGRIERTEM SCHALTKREIS
DISPOSITIF À CIRCUIT INTÉGRÉ SANS FIL

(30) Priority: 06.04.2007 JP 2007101145
(43) Date of publication of application: 17.06.2009
(73) Proprietor: Murata Manufacturing Co. Ltd., Kyoto-fu 617-8555 (JP)
(72) Inventor: IKEMOTO, Nobuo, Nagaokakyo-shi Kyoto 617-8555 (JP); KATO, Noboru, Nagaokakyo-shi Kyoto 617-8555 (JP)
(74) Representative: Zimmermann, Tankred Klaus
(86) International application number: PCT/JP2008/051501
(87) International publication number: WO 2008/126451

(56) References cited:
- EP-A- 1 689 031
- WO-A-2007/026048
- JP-A- 2002 366 916
- JP-A- 2007 018 067
- US-A1- 2003 206 107
- US-A1- 2005 001 785
- US-A1- 2005 052 283
- US-B1- 6 366 260
- US-B1- 7 152 804

## Description

### Technical Field

The present invention relates to a wireless IC device, in particular, a wireless IC device using an RF-ID (radio frequency identification) system for performing data communication in a non-contact manner using an electromagnetic wave.

### Background Art

In recent years, as commodity management systems, there have been used RF-ID systems where a reader/writer for generating an induced electromagnetic field and an RF-ID tag that is attached to a commodity and stores predetermined information communicate with each other in a non-contact manner so as to transmit information. Also, Patent Document 1 (JP 2007-018067 A) discloses a combination tag including an RF-ID tag and a resonant tag.

Fig. 1 is a drawing showing a configuration example of a combination tag shown in that Patent Document 1. As shown in the drawing, in an RF-ID tag 60, the outer circumference of an inlet sheet 61 is protected by an overlay sheet 62. On the inlet sheet 61, an IC chip 64, a first antenna 65, and a second antenna 66 are mounted on a base. The overlay sheet 62 includes a front sheet and a back sheet. The first antenna 65 is a spiral coil antenna and is intended to generate power for starting a CPU of the IC chip 64 and receive a signal from an antenna unit of a reader/writer. The first antenna 65 is formed of a conductor electrically connected to two terminals of the IC chip 64. While the second antenna 66 is formed of a conductor like the first antenna 65, it is electrically insulated from the IC chip 64. This second antenna 66 is a spiral coil antenna and forms a resonant circuit using LC resonance between an inductance component L thereof and a capacitance component C thereof.

Since the second antenna 66 consumes energy due to resonance in an adjacent electromagnetic field generated by an antenna unit, it produces large return loss. By detecting this using the antenna unit, the presence or absence of the RF-ID tag 60 is detected.

Incidentally, in a combination tag having a structure as shown in Patent Document 1, a second antenna for serving as a resonant tag is disposed near a first antenna for serving as an RF-ID tag; therefore, there is a problem that the whole size of the combination tag is increased. Also, each antenna resonates at a certain frequency due to an inductance based on the length of an electrode thereof and a stray capacitance between spiral electrodes. In a case where the resonant frequency of the first antenna and that of the second antenna are close to each other, when an electromagnetic field is being radiated to the first antenna and the first antenna is acting as an RF-ID tag, the same electromagnetic field is radiated to the second antenna. For this reason, the RF-ID tag and resonant tag may resonate simultaneously. At that time, there is a problem that an electromagnetic field generated by the resonant tag disturbs an electromagnetic field on the RF-ID tag side thereby preventing the operation as an RF-ID tag.

WO 2007/026048 A1 describes an antenna used in radio-frequency identification. The antenna includes a main conductor plate disposed on top of and connected to a ground plane via a perpendicular short-circuit plate. A microchip acting as the transceiver of an RFID transponder is placed on the edge of the main conductor plate. The ground terminal of the microchip is arranged using an open microstrip line whose end is bent towards the open edge of the main conductor plate to achieve two-frequency behavior.

US 6,366,260 B1 describes a radio-frequency identification transponder that includes a hollowed monopole antenna. The hollowed monopole antenna is co-located on a substrate with RFID circuitry and a quarter wave transformer. The quarter wave transformer acts as a reference for the RFID circuitry.

EP 1,689,031 A2 describes a wireless communication device that has a plurality of antennas for multi-frequency usage. The wireless communication device has a dipole antenna that is used with one or more loop conductor antennas to achieve the desired operating frequencies.

US 2005/052283 A1 describes a multi-band, multi-mode RFID tag that uses a single antenna structure and integrated circuit to provide asset location information at any stage of a supply chain. The unified tag design operates at multiple frequencies (or bands) using the antenna structure.

US 2003/0206107 A1 describes an antenna shelf tape for use with items having radio frequency identification elements or tags associated with items of interest.

US 7,152,804 B1 describes an identification tag including an inductor, a first capacitor plate coupled to the inductor, a dielectric film on the first capacitor plate, a semiconductor component on the dielectric film, and a conductor that provides electrical communication between the semiconductor component and the inductor.

### Summary of the Invention

Accordingly, an object of the present invention is to provide a wireless IC device where an RF-ID tag and a resonant tag are combined and that is small and has a good radiation characteristic.

This object is achieved by a wireless IC device according to claim 1.

In order to solve the above-mentioned problems, the present invention is configured as follows:
(1) A wireless IC device has a structure where a electrode for both radiation and resonation acting as a radiant electrode at a frequency for RF-ID and acting as a resonant electrode that resonates at a frequency different from the frequency for RF-ID is provided on a base and a wireless IC for RF-ID electrically connected or electromagnetically coupled to the electrode for both radiation and resonation is mounted on the base.
(2) The electrode for both radiation and resonation is formed by a line electrode part and a capacitance electrode part for forming a capacitance between both ends of the line electrode part.
(3) The capacitance electrode part includes two capacitance electrodes opposed to each other in a thickness direction with a dielectric layer therebetween. The line electrode part takes the shape of a spiral going around the capacitance electrode part a plurality of times. A crossing line electrode connecting between a capacitance electrode opposed to a capacitance electrode connected to an inner circumferential end of the spiral line electrode part and an outer circumferential end of the spiral line electrode part is provided on the base. The wireless IC is mounted near the crossing line electrode.
(4) The capacitance electrode part includes two capacitance electrodes opposed to each other in a thickness direction with a dielectric layer therebetween, and the wireless IC is mounted near one of the two capacitance electrodes.
(5) The pair of electrodes for both radiation and resonation are provided on the base and the wireless IC is mounted in such a manner that the wireless IC is electrically connected to or coupled to each of the pair of electrodes for both radiation and resonation.
(6) A radiant electrode forming an equivalent dipole antenna with the electrode for both radiation and resonation while forming a pair with the electrode for both radiation and resonation is provided on the base. The wireless IC is electrically connected or electromagnetically coupled to the electrode for both radiation and resonation and the radiant electrode.
(7) The capacitance electrode part is disposed inside the spiral line electrode part, and the radiant electrode is disposed outside the spiral line electrode part.
(8) A line length of the radiant electrode corresponds to approximately a 1/4 wavelength at the frequency for RF-ID, and a resonant frequency of the electrode for both radiation and resonation is a frequency lower than the frequency for RF-ID.
(9) The wireless IC is a wireless IC chip electrically connected to the electrode for both radiation and resonation.
(10) The wireless IC is an electromagnetically-coupled module including a feed circuit substrate and a wireless IC chip, the feed circuit substrate being provided with a matching circuit including an inductor, the wireless IC chip being mounted on an upper surface of the feed circuit substrate, the wireless IC chip being electrically connected to the feed circuit.

### Advantages

According to the present invention, the following advantages are obtained.
(1) Since electrode for both radiation and resonance acts as a radiant electrode at a frequency for RF-ID and resonates at a frequency different from the frequency for RF-ID, it acts as a combination tag where an RF-ID tag and a resonant tag are combined. In this case, there is no need to provide an antenna for an RF-ID tag and an antenna for a resonant tag independently; therefore, the electrode for both radiation and resonance as a whole can be downsized. Also, there occur no degradation of the radiation characteristic due to interference between an antenna for an RF-ID tag and an antenna for a resonant tag; therefore, a wireless IC device having a good radiation characteristic is formed.
(2) Since the electrode for both radiation and resonance is formed by the line electrode part and capacitance electrode part, the resonant frequency per predetermined footprint as a resonant tag can be reduced by converting an inductance L of the line electrode part and a capacitance C of the capacitance electrode part into distributed constants. Conversely, the footprint per predetermined resonant frequency can be reduced. For this reason, the electrode for both radiation and resonance as a whole can be downsized. Also, if the frequency of the RF-ID tag is ten times that of the resonant tag or higher, the capacitance electrode part has an extremely small impedance at the frequency for RF-ID. Therefore, the whole electrode for both radiation and resonance acts as a single radiant electrode. Thus, the radiation characteristic as an RF-ID tag is further improved.
(3) Since the capacitance electrode part includes the two capacitance electrodes opposed to each other in the thickness direction with the dielectric layer therebetween, since the line electrode part takes the shape of a spiral going around the capacitance electrode part several times, and since the wireless IC is connected to the vicinity of the crossing line electrode bridging between the capacitance electrode and the outer circumferential end of the line electrode part while crossing the line electrode part, it can be considered that the line electrode part is integrally connected to the capacitance electrode part in an equivalent manner via the crossing line electrode portion, although the line electrode part takes the shape of a spiral. Thus, the electrode for both radiation and resonance acts as a radiant electrode having high radiation efficiency.
(4) Since the electrode for both radiation and resonance is formed by the line electrode part and capacitance electrode part and the wireless IC is connected to the capacitance electrode part, the capacitance electrode part has an extremely small impedance at the frequency for RF-ID. Thus, the effect as a radiant electrode, of the whole electrode for both radiation and resonance can be increased so that the radiation characteristic of the RF-ID tag antenna can be improved.
(5) Since the pair of electrodes for both radiation and resonance are provided on the above-mentioned base and the wireless IC is mounted so that the pair of electrode for both radiation and resonance are connected to the wireless IC as a dipole antenna, the pair of electrodes for both radiation and resonance act as two resonant tags having different resonant frequencies as well as act as radiant electrodes for an RF-ID tag having a relatively large area. Thus, a good radiation characteristic can be realized.
(6) Since, a radiant electrode that is independent of the electrode for both radiation and resonance and forms a dipole antenna for an RF-ID tag with the electrode for both radiation and resonance is provided, a high radiation characteristic is obtained.
(7) Since the radiant electrode is disposed outside the spiral line electrode part, the radiant electrode is not shielded by the spiral line electrode part. Thus, a high radiation characteristic can be maintained.
(8) Since the line length of the radiant electrode corresponds to approximately a 1/4 wavelength of the frequency for RF-ID and the resonant frequency (frequency of a resonant tag) of the electrode for both radiation and resonance is lower than the frequency for RF-ID, the electrode for both radiation and resonance can be made to act as an equivalent single radiant electrode. Thus, the radiation characteristic as an RF-ID tag can be enhanced.
(9) Since the wireless IC is a wireless IC chip electrically connected to the electrode for both radiation and resonance, the wireless IC portion can be formed in an extremely small size so that the wireless IC device as a whole can be downsized and slimmed down.
(10) Since the electromagnetically-coupled module includes the feed circuit substrate provided with a matching circuit including an inductor and a wireless IC chip mounted on the upper surface of the feed circuit substrate and the electromagnetically-coupled module is mounted, a characteristic change caused by a shift in the mount position of the wireless IC can be eliminated. Also, the matching with the radiant electrode can be increased so that the antenna efficiency can be increased.

### Brief Description of Drawings

[Fig. 1] Fig. 1 is a drawing showing a configuration of an RF-ID tag disclosed in Patent Document 1.
[Fig. 2] Fig. 2 includes a plan view and a sectional view of a wireless IC device according to a first embodiment.
[Fig. 3] Fig. 3 includes drawings showing actions and advantages of the wireless IC as an RFID tag.
[Fig. 4] Fig. 4 includes plan views of a wireless IC device according to a second embodiment.
[Fig. 5] Fig. 5 includes a plan view and a sectional view of a wireless IC device according to a third embodiment.
[Fig. 6] Fig. 6 is a plan view of a wireless IC device according to a fourth embodiment.
[Fig. 7] Fig. 7 is a sectional view of an electromagnetically-coupled module used in the wireless IC device.
[Fig. 8] Fig. 8 is a plan view of a wireless IC device according to a fifth embodiment.
[Fig. 9] Fig. 9 is a plan view of a wireless IC device according to a sixth embodiment.
[Fig. 10] Fig. 10 is a plan view of a wireless IC device according to a seventh embodiment.
[Fig. 11] Fig. 11 is a plan view of a wireless IC device according to an eighth embodiment.

### Reference Numerals

- 6: solder bump
- 13: inductor conductor
- 14: capacitor electrode
- 20: electrode for both radiation and resonance
- 21: base
- 22: line electrode part
- 23, 24: capacitance electrode part
- 25: crossing line electrode
- 26: front-back connection part
- 27: insulating layer
- 30: electromagnetically-coupled module
- 31: wireless IC
- 32: feed circuit substrate
- 33: radiant electrode
- 34: wireless IC chip
- 40: mount substrate
- 41: ground electrode
- 42: non-ground area
- 101 to 108: wireless IC device

### Best Modes for Carrying Out the Invention

### First Embodiment

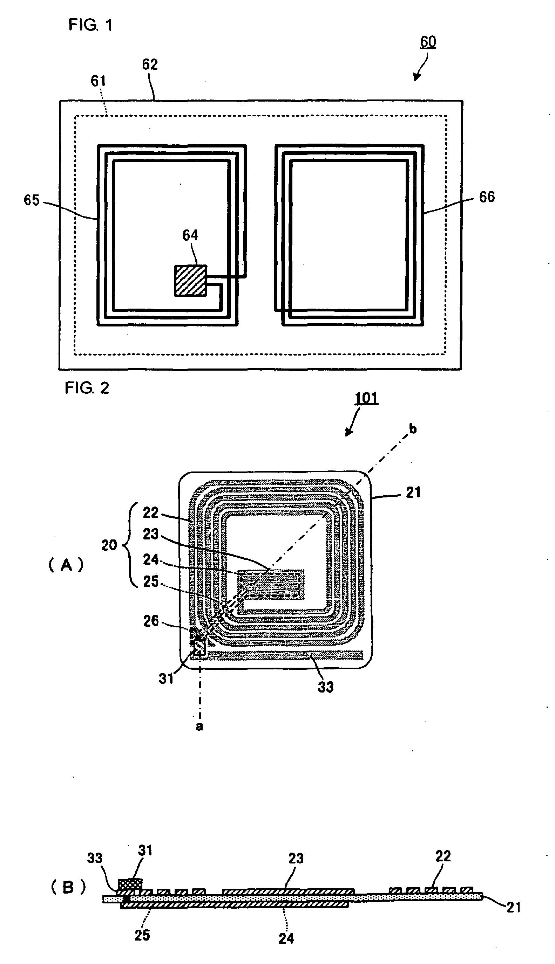

Fig. 2 includes drawings showing a configuration of a wireless IC device according to a first embodiment. Fig. 2(A) is a plan view thereof and Fig. 2(B) is a sectional view between a and b of Fig. 2(A). This wireless IC device 101 is formed by forming predetermined various electrodes on a base (insulating sheet) 21 and mounting a wireless IC 31 formed of a wireless IC chip on the base 21.

In Fig. 2, the wireless IC device 101 is formed by forming desired electrode patterns made of a conductor such as copper or aluminum on the base 21 made of a resin film such as PET or PP. Specifically, a resin sheet to which a copper foil or an aluminum foil is adhering is used and the copper foil or aluminum foil is patterned by etching.

As shown in Fig. 2, a spiral line electrode part 22 and a capacitance electrode part 23 connected to the inner circumferential end thereof are formed on the upper surface of the base 21. On the lower (back) surface of the base 21, a capacitance electrode part 24 is formed in a position opposed to the capacitance electrode part 23 and a crossing line electrode 25 bridge-connecting between this capacitance electrode part 24 and a position (position of a front-back connection part 26) opposed to the outer circumferential end of the line electrode part 22 while crossing the orbiting line electrode part 22 is formed.

An end of the above-mentioned crossing line electrode 25 and the outer circumferential end of the line electrode part 22 are electrically connected via the front-back connection part 26.

Also, a linear radiant electrode 33 is formed on the upper surface of the base 21. The wireless IC 31 is mounted so that terminal electrodes are connected to the vicinity of one end of the radiant electrode 33 and to the front-back connection part 26.

The wireless IC device shown in Fig. 2 acts as a resonant tag and an RF-ID tag. The action as a resonant tag is as follows.

, The portion of the line electrode part 22 from the spiral outer circumferential end thereof to the inner circumferential end thereof acts as an inductor. The capacitance electrode parts 23 and 24 opposed to each other with the base 21 therebetween act as a capacitor. An LC resonant circuit formed by this inductor L and this capacitor C acts as a resonant tag. By matching this resonant frequency with a frequency (e.g., 8.2 MHz) required as a resonant tag in advance, the LC resonant circuit is coupled to an induced electromagnetic field generated by an antenna of a reader for a resonant tag at that frequency and perturbs the induced electromagnetic field. That is, the. above-mentioned LC resonant circuit resonates in the adjacent electromagnetic field generated by the antenna of the reader for a resonant tag and thus consumes energy, increasing return loss. By detecting this using the resonant tag reader, the presence or absence of the wireless IC device 101 is detected.

Since the wireless IC 31 and radiant electrode 33 exists outside a closed circuit of the above-mentioned LC resonant circuit, these do not affect the resonant tag.

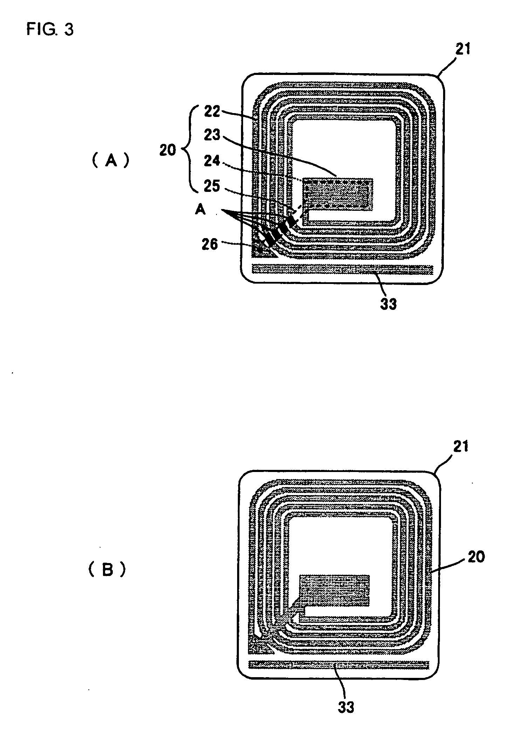

Next, the action as an RF-ID tag will be described with reference with Fig. 3.
Fig. 3(A) shows a state before the wireless IC 31 is mounted. Capacitance is generated in gaps (A portions) between the crossing line electrode 25 and the line electrode part 22 crossing the crossing line electrode 25 with the base 21 therebetween. The impedance based on that capacitance is extremely low in the RF-ID frequency range. Similarly, as for the capacitance between the capacitance electrode parts 23 and 24, the impedance is extremely low in the RF-ID frequency range. For this reason, in the frequency range (e.g., 900 MHz in the UHF band) of the RF-ID tag, the line electrode part 22, capacitance electrode parts 23 and 24, and crossing line electrode 25 act as one continuous electrode 20 for both radiation and resonance shown in Fig. 3(B). This electrode 20 for both radiation and resonance and another radiant electrode 33 act as a dipole antenna.

The above-mentioned radiant electrode 33 has a length approximately equal to a 1/4 wavelength at the RF-ID frequency. However, the length or size of the radiant electrode is not limited to a 1/4 wavelength and may be any size if the size is a size such that the radiant electrode acts as a radiant electrode, particularly as a radiant electrode of a dipole antenna, in the RF-ID frequency range.

As described above, it is preferable that the frequency of the resonant tag and that of the RF-ID tag have a relation where if these frequencies are compared, the former is ten times the latter or higher. If there is such a frequency relation, the capacitance of the A portions shown in Fig. 3(A) becomes the order of several pF and the impedance becomes as low an impedance as the order of several tens of Ω in the UHF band when this wireless IC device 101 acts as an RF-ID tag. Thus, the wireless IC device 101 acts as a single electrode as shown in Fig. 3(B) and a characteristic thereof become directivity close to that of a dipole antenna.

### Second Embodiment

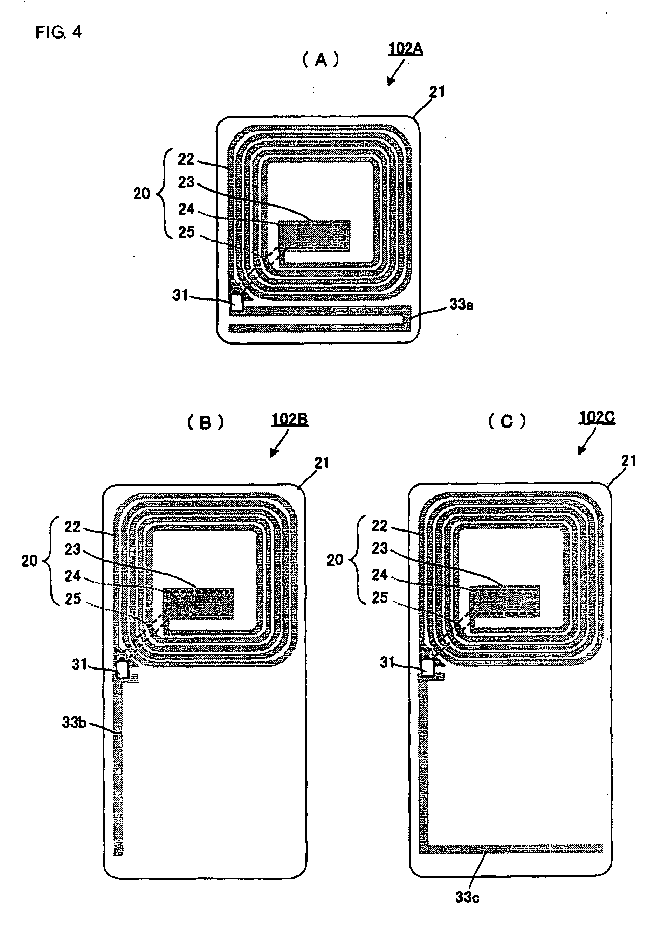

Fig. 4 is a plan view of a wireless IC device according to a second embodiment. While the linear radiant electrode 33 is formed along a side of the spiral line electrode part 22 and a side of the base 21 in an example shown in Fig. 2, the radiant electrode 33 in examples shown in this Fig. 4. has shapes different from that. In an example shown in Fig. 4(A), a radiant electrode 33a has a shape where it turns back so that it reciprocates along a side of the line electrode part 22 and a side of the base 21.

Also, in an example shown in Fig. 4(B), a radiant electrode 33b is linearly formed along one side of the base 21 and in a direction going away from the electrode 20 for both radiation and resonance.

Also, in an example shown in Fig. 4(C), a radiant electrode 33c is formed in the form of L along two sides of the base 21.

As for Fig. 4, the configuration and action except for what is described above are the same as those according to the first embodiment.
According to the structure shown in Fig. 4(A), an equivalent line length (electric length) of the radiant electrode 33a is obtained almost without increasing the area of the base 21. The area of the base 21 necessary to obtain a frequency required by the RF-ID tag can be reduced accordingly.

According to the structure shown in Fig. 4(B), the electrode 20 for both radiation and resonance and radiant electrode 33b extend in directions going away from each other. Thus, the radiation efficiency as a dipole antenna is increased so that the sensitivity of the RF-ID tag can be increased.

Also, according to the structure shown in Fig. 4(C), the radiant electrode 33c having a necessary line length (electric length) can be formed while effectively using the area of the base 21. This can reduce the whole size while increasing the sensitivity as an RF-ID tag.

### Third Embodiment

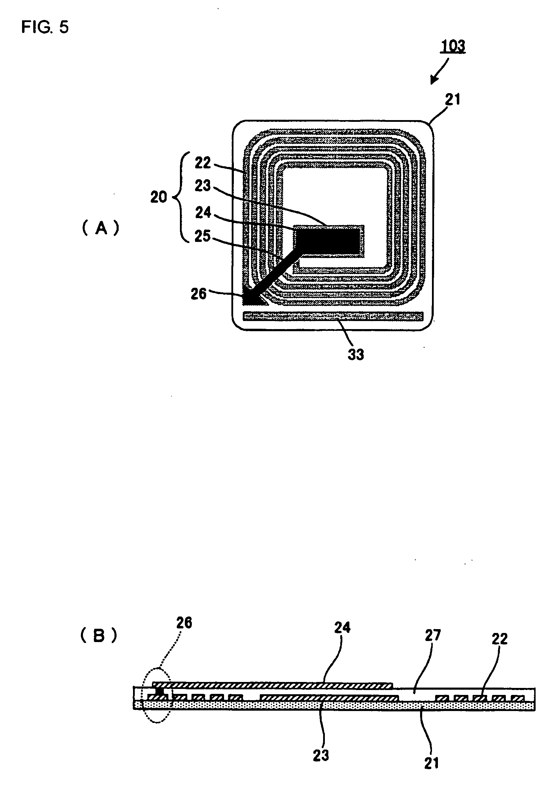

Fig. 5 includes drawings showing a configuration of a wireless IC device according to a fifth embodiment. (A) is a plan view and (B) is a sectional view of a main part thereof. While, in the example shown in Fig. 2, various electrodes are formed on the upper and lower surfaces of the base 21 and a capacitance is formed by the capacitance electrode parts opposed to each other with the base 21 therebetween, a circuit is formed using only the upper surface of the base 21 in an example shown in Fig. 5. That is, the spiral line electrode part 22 and the capacitance electrode part 23 connected to the inner circumferential end thereof are formed on the upper surface of the base 21. These electrodes are coated with an insulating layer 27 and the capacitance electrode part 24 is formed in a position opposed to the capacitance electrode part 23 on the upper surface of the insulating layer 27. Also, the crossing line electrode 25 connecting between the capacitance electrode, part 24 and the outer circumferential end of the line electrode part 22 is formed on the upper surface of the insulating layer 27. Also, by performing punching between an end of the crossing line electrode 25 and the outer circumferential end of the line electrode part 22, the front-back connection part 26 is formed. The radiant electrode 33 may be formed on the upper surface of the base 21 or on the upper surface of the insulating layer 27. However, if the radiant electrode 33 is formed on the upper surface of the base 21, an opening portion of the insulating layer 27 is provided at least in a portion of the radiant electrode 33 on which a wireless IC is mounted.

As with the wireless IC shown in Fig. 2, the wireless IC is mounted in such a manner that terminal electrodes are connected to the front-back connection part 26 and to an end of the radiant electrode 33.

By disposing the capacitance electrode parts 23 and 24 in an opposed manner with the insulating layer 27 interposed therebetween as described above, a larger capacitance is formed. Also, a larger capacitance is formed on opposed portions of the crossing line electrode 25 and line electrode part 22. Thus, the action as a radiant electrode of the electrode 20 for both radiation and resonance at the frequency range of the RF-ID tag is increased.

### Fourth Embodiment

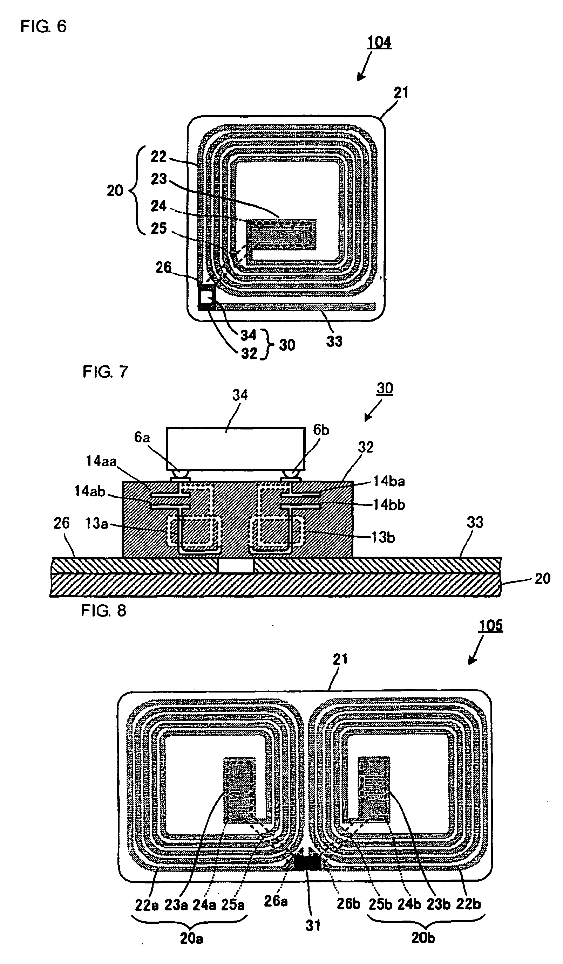

Fig. 6 is a plan view of a wireless IC device according to a fourth embodiment. Fig. 7 is a sectional view of an electromagnetically-coupled module 30 used in this wireless IC device 104.

The electromagnetically-coupled module 30 includes a feed circuit substrate 32 and a wireless IC chip 34 mounted on an upper portion thereof. While the two connection terminals formed on the wireless IC 31 are directly connected to the electrode 20 for both radiation and resonance and the radiant electrode 33 in the first to third embodiments, the two connection terminals are electromagnetically coupled to the electrode 20 for both radiation and resonance and radiant electrode 33 in an example shown in Fig. 6.

As shown in Fig. 7, capacitor electrodes 14aa, 14ab, 14ba, and 14bb and inductor conductors 13a and 13b are formed inside the feed circuit substrate 32. Electrode pads to which the capacitor electrodes 14aa and 14ba are connected are formed on the upper surface of the feed circuit substrate 32. Solder bumps 6a and 6b of the wireless IC chip 34 are bonded to the above-mentioned electrode pads.

The wireless IC chip 34 includes a circuit for feeding the solder bump 6a and a circuit for feeding the 6b. Thus, a capacitor between the capacitor electrodes 14aa and 14ab and an inductor formed of the inductor conductor 13a forms an LC circuit. The inductor conductors 13a and 13b, front-back connection part 26, and radiant electrode 33 are magnetically coupled. In this way, the wireless IC chip 34 and a dipole antenna are impedance-matched and electromagnetic coupled. Thus, a characteristic change caused by a shift in the mount position of the wireless IC can be eliminated. Also, the matching with the radiant electrode can be increased so that the antenna efficiency can be increased.

### Fifth Embodiment

Fig. 8 is a plan view of a wireless IC device according to a fifth embodiment. A wireless IC device 105 according to the fifth embodiment uses two electrodes 20a and 20b for both radiation and resonance for serving as resonant tags also serve as radiant electrodes for RF-ID.

Two spiral line electrode parts 22a and 22b and capacitance electrode parts 23a and 23b connected to the inner circumferential ends thereof are formed on the upper surface of the base 21. Also, on the lower surface of the base 21, capacitance electrode parts 24a and 24b are formed in positions opposed to the capacitance electrode parts 23a and 23b, respectively, and crossing line electrodes 25a and 25b bridge-connecting between the capacitance electrode parts 24a and 24b and front-back connection parts 26a and 26b while crossing the line electrode parts are formed. Ends of the crossing line electrodes 25a and 25b and the outer circumferential ends of the line electrode parts 22a and 22b are electrically connected respectively using the front-back connection parts 26a and 26b.

The wireless IC 31 is mounted so that connection terminals are connected to the above-mentioned front-back connection parts 26a and 26b. The electrode 20a for both radiation and resonance formed by the line electrode part 22a, capacitance electrode parts 23a and 24a, and crossing line electrodes 25a acts as a resonant circuit for serving as one resonant tag. The electrode 20b for both radiation and resonance formed by the line electrode part 22b, capacitance electrode parts 23b and 24b, and crossing line electrodes 25b acts as a resonant circuit for serving as another resonant tag. The two electrodes 20a and 20b for both radiation and resonance act as radiant electrodes in the frequency range of an RF-IC tag, as in the above-mentioned embodiments. Therefore, eventually, a structure where a dipole antenna is connected to the wireless IC 31 is formed.

According to such a structure, the two electrodes 20a and 20b for both radiation and resonance have good symmetry. Thus, the radiation characteristic as an RF-ID tag becomes better.

While the resonant frequencies of the above-mentioned two resonators for serving as resonant tags may be identical, a wireless IC device applicable to both of two resonant tags adhering to different standards can be formed if different frequencies are set for the resonant frequencies.

### Sixth Embodiment

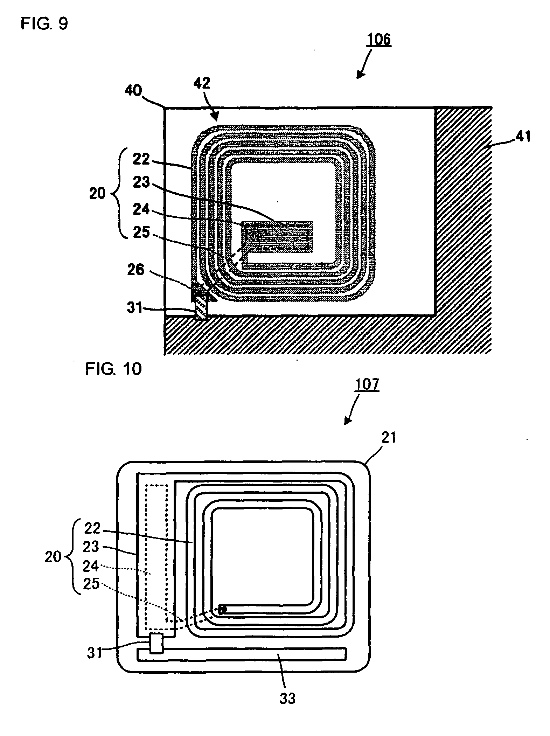

Fig. 9 is a partial plan view of a wireless IC device according to a sixth embodiment. While, in all the first to fifth embodiments, the wireless IC device is formed on the sheet-shaped base and configured so that the wireless IC device is used, for example, in such a manner that the wireless IC device is stuck on a commodity, a wireless IC device 106 according to the sixth embodiment is formed, for example, on a mount substrate of a terminal unit (cell phone) included in a mobile communication system.

In Fig. 9, a non-ground area 42 where a ground electrode 41 is not formed is provided at an edge of a mount substrate 40. The spiral line electrode part 22 and the capacitance electrode part 23 connected to the inner circumferential end thereof are formed on the upper surface of this non-ground area 42. On the lower (back) surface of the non-ground area 42, the capacitance electrode part 24 is formed in a position opposed to the capacitance electrodes part 23 and the crossing line electrode 25 bridge-connecting between this capacitance electrode part 24 and a position (position of the front-back connection part 26) opposed to the outer circumferential end of the line electrode part 22 while crossing the orbiting line electrode part 22 is formed. An end of the crossing line electrode 25 and the outer circumferential end of the line electrode part 22 are electrically connected via the front-back connection part 26.

The wireless IC 31 is mounted so that terminal electrodes are electrically connected to the front-back connection part 26 and ground electrode 41. The electrode 20 for both radiation and resonance formed by the line electrode part 22, capacitance electrode parts 23 and 24, and crossing line electrode 25 acts as a resonant circuit of a resonant tag. Also, the electrode 20 for both radiation and resonance acts as a radiant electrode of an RF-ID tag. One terminal electrode of the wireless IC 31 is connected to the electrode 20 for both radiation and resonance and the other terminal electrode thereof is connected to the ground electrode 41; therefore, the while electrode 20 for both radiation and resonance acts as a monopole antenna.

According to such a structure, the wireless IC device can be formed on a mount substrate of a cell phone or the like. Also, there is no need to form another radiant electrode for forming a dipole antenna. Therefore, the entire footprint can be reduced.

The wireless IC devices shown as the first to fifth embodiments may be bonded to the upper surface of the non-ground area 42 and the wireless IC 31 may be mounted so that terminal electrodes are electrically connected to the electrode 20 for both radiation and resonance and ground electrode 41.

### Seventh Embodiment

Fig. 10 is a plan view of a wireless IC device according to a seventh embodiment. While the capacitance electrode parts are disposed inside the spiral line electrode part in all the first to sixth embodiments, capacitance electrode parts are disposed outside a spiral line electrode part in an example shown in Fig. 10. That is, the spiral line electrode part 22 and the capacitance electrode part 23 connected to the outer circumferential end thereof are formed on the upper surface of the base 21. On the lower surface of the base 21, the capacitance electrode part 24 is formed in a position opposed to the capacitance electrode part 23 and the crossing line electrode 25 extending to the capacitance electrode part 24 and to a position opposed to the inner circumferential end of the line electrode part 22 is formed. An end of the crossing line electrode 25 on the back surface and the inner circumferential end of the line electrode part 22 on the front surface are electrically connected. According to such a configuration, the electrode 20 for both radiation and resonance formed by the line electrode part 22, capacitance electrode parts 23 and 24, and crossing line electrode 25 acts as a resonant circuit of a resonant tag.

Also, the radiant electrode 33 is formed on the upper surface of the base 21 and the wireless IC 31 is mounted so that terminal electrodes are electrically connected to an end of the radiant electrode 33 and the capacitance electrode part 23.

According to such a configuration, both a capacitance generated in a position where the line electrode part 22 and crossing line electrode 25 are opposed to each other and a capacitance generated in a position where the capacitance electrode parts 23 and 24 are opposed to each other have an extremely low impedance in the frequency range of an RF-ID tag. Therefore, the electrode 20 for both radiation and resonance may be considered as one continuous electrode in the frequency range of an RF-ID tag and acts as a radiant electrode. Also in this case, the wireless IC is mounted near the crossing line electrode 25 and capacitance electrode parts 23 and 24. Thus, the effect as a uniform metal plate-shaped radiant electrode is increased.

### Alternative Example

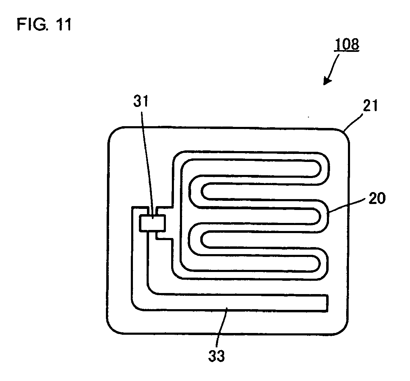

Fig. 11 is a plan view of a wireless IC device according to an eighth embodiment. The electrode 20 for both radiation and resonance formed globally in the form of a loop and partially in the form of meanders is formed on the upper surface of the base 21. Also, the L-shaped radiant electrode 33 is formed on the upper surface of the base 21. The wireless IC 31 is mounted so that terminal electrodes are electrically connected to an end of the radiant electrode 33 and a part of the electrode 20 for both radiation and resonance. The electrode 20 for both radiation and resonance acts as a loop antenna, forming a closed loop. Therefore, an inductance component thereof and a capacitance component thereof like distributed constants determine a resonant frequency and this resonant frequency is set as the frequency of a resonant tag. Therefore, the electrode 20 for both radiation and resonance acts as a resonant circuit of a resonant tag. On the other hand, the electrode 20 for both radiation and resonance acts as a radiant electrode in the form of a uniform metal plate in the frequency range of an RF-ID tag, forming a dipole antenna with the radiant electrode 33.

Since the electrode 20 for both radiation and resonance is formed so that it forms not a spiral but an identical plane-shaped, closed loop. Therefore, the electrode 20 for both radiation and resonance may be formed on only one surface of the base 21.

## Claims

1. A wireless IC device comprising:
a base (21); and
a wireless IC (30; 31) for RF-ID mounted on the base (21);
wherein the wireless IC device when acting as a resonant tag is configured to operate at a first frequency and when acting as an RF-ID tag is configured to operate at a second frequency different from the first frequency,
**characterized in that**
the resonant tag comprises an electrode (20) comprising a spiral line electrode part (22) and a capacitance electrode part (24, 25) formed on the base (21) and defining an LC resonant circuit having a resonant frequency at the first frequency;
the RF-ID tag comprises a dipole antenna operating at the second frequency, the dipole antenna comprising the electrode (20) defining the first dipole electrode and a radiant electrode (33) formed on the base (21) and defining the second dipole electrode;
the wireless IC (30; 31) and the radiant electrode (33) are arranged outside the LC resonant circuit; and
the wireless IC (30,; 31) is electrically connected or electromagnetically coupled to the electrode (20) and the radiant electrode (33).

2. The wireless IC device according to Claim 1, further comprising
a crossing line electrode (25) provided on the base (21), the crossing line electrode (25) connecting a first capacitance electrode (25) opposed to a second capacitance electrode (24) connected to an inner circumferential end of the spiral line electrode part (22) and an outer circumferential end of the spiral line electrode part (22), wherein
the capacitance electrode part includes the first and second capacitance electrodes (25, 24) opposed to each other in a thickness direction with a dielectric layer therebetween,
the spiral line electrode part (22) goes around the capacitance electrode part (24, 25) a plurality of times, and
the wireless IC (30; 31) is mounted near the crossing line electrode.

3. The wireless IC device according to Claim 1, wherein the capacitance electrode part includes two capacitance electrodes (24, 25) opposed to each other in a thickness direction with a dielectric layer therebetween, and
the wireless IC (30; 31) is mounted near one of the two capacitance electrodes (24, 25).

4. The wireless IC device according to Claim 1, wherein
the capacitance electrode part (24, 25) is disposed inside the spiral line electrode part (22), and
the radiant electrode (33) is disposed outside the spiral line electrode part (22).

5. The wireless IC device according to Claim 4, wherein
a line length of the radiant electrode (33) corresponds to approximately a 1/4 wavelength at the frequency for RF-ID.

6. The wireless IC device according to any one of Claims 1 and 5, wherein
the wireless IC is an electromagnetically-coupled module (30) including a feed circuit substrate (32) and a wireless IC chip (34), the feed circuit substrate (32) being provided with a matching circuit including an inductor (13a, 13b), the wireless IC chip (34) being mounted on an upper surface of the feed circuit substrate (32), the wireless IC chip (34) being electrically connected to the feed circuit.

## Patentansprüche

1. Eine drahtlose IC-Vorrichtung, die folgende Merkmale aufweist:
eine Basis (21); und
eine drahtlose IC (30; 31) für RF-ID, die an der Basis (21) befestigt ist;
wobei die drahtlose IC-Vorrichtung, wenn sie als ein Resonanzetikett wirkt, konfiguriert ist, bei einer ersten Frequenz zu arbeiten, und wenn sie als ein RF-ID-Etikett wirkt, konfiguriert ist, bei einer zweiten Frequenz zu arbeiten, die sich von der ersten Frequenz unterscheidet,
**dadurch gekennzeichnet, dass**
das Resonanzetikett eine Elektrode (20) aufweist, die einen Spiralleitungselektrodenteil (22) und einen Kapazitätselektrodenteil (24, 25) aufweist, die auf der Basis (21) gebildet sind, und eine LC-Resonanzschaltung mit einer Resonanzfrequenz bei der ersten Frequenz definiert;
das RF-ID-Etikett eine Dipolantenne aufweist, die bei der zweiten Frequenz arbeitet, wobei die Dipolantenne, die die Elektrode (20) aufweist, die erste Dipolelektrode definiert und eine Strahlungselektrode (23), die auf der Basis (21) gebildet ist, die zweite Dipolelektrode definiert;
die drahtlose IC (30; 31) und die Strahlungselektrode (33) außerhalb der LC-Resonanzschaltung angeordnet sind; und
die drahtlose IC (30; 31) elektrisch verbunden ist mit oder elektromagnetisch gekoppelt ist mit der Elektrode (20) und der Strahlungselektrode (33).

2. Die drahtlose IC-Vorrichtung gemäß Anspruch 1, die ferner folgendes Merkmal aufweist:
eine Kreuzungsleitungselektrode (25), die auf der Basis (21) vorgesehen ist, wobei die Kreuzungsleitungselektrode (25) eine erste Kapazitätselektrode (25) gegenüberliegend zu einer zweiten Kapazitätselektrode (24) verbindet, verbunden mit einem inneren Umfangsende des Spiralleitungselektrodenteils (22) und einem Außenumfangsende des Spiralleitungselektrodenteils (22), wobei
der Kapazitätselektrodenteil die erste und die zweite Kapazitätselektrode (25, 24) gegenüberliegend zueinander in einer Dickenrichtung umfasst, mit einer dielektrischen Schicht zwischen denselben,
der Spiralleitungselektrodenteil (22) mehrmals um den Kapazitätselektrodenteil (24, 25) verläuft, und
die drahtlose IC (30; 31) in der Nähe der Kreuzungsleitungselektrode befestigt ist.

3. Die drahtlose IC-Vorrichtung gemäß Anspruch 1, bei der der Kapazitätselektrodenteil zwei Kapazitätselektroden (24, 25) gegenüberliegend zueinander in einer Dickerichtung mit einer dielektrischen Schicht zwischen denselben umfasst, und
die drahtlose IC (30; 31) in der Nähe von einer der zwei Kapazitätselektroden (24, 25) befestigt ist.

4. Die drahtlose IC-Vorrichtung gemäß Anspruch 1, bei der
der Kapazitätselektrodenteil (24, 25) innerhalb des Spiralleitungselektrodenteils (22) angeordnet ist, und
die Strahlungselektrode (33) außerhalb des Spiralleitungselektrodenteils (22) angeordnet ist.

5. Die drahtlose IC-Vorrichtung gemäß Anspruch 4, bei der
eine Leitungslänge der Strahlungselektrode (33) ungefähr einem Viertel der Wellenlänge bei der Frequenz für RF-ID entspricht.

6. Die drahtlose IC-Vorrichtung gemäß einem der Ansprüche 1 und 5, bei der die drahtlose IC ein elektromagnetisch gekoppeltes Modul (30) ist, das ein Speiseschaltungssubstrat (32) und einen drahtlosen IC-Chip (34) umfasst, wobei das Speiseschaltungssubstrat (32) mit einer Anpassungsschaltung versehen ist, die einen Induktor (13a, 13b) umfasst, wobei der drahtlose IC-Chip (34) auf einer oberen Oberfläche des Speiseschaltungssubstrats (32) befestigt ist, wobei der drahtlose IC-Chip (34) elektrisch mit der Speiseschaltung verbunden ist.

## Revendications

1. Dispositif à circuit intégré sans fil comportant:
une embase (21) ; et
un circuit intégré sans fil (30 ; 31) pour une RFID montée sur l'embase (21) ;
dans lequel le dispositif à circuit intégré sans fil, lorsqu'il fonctionne en tant qu'étiquette résonnante, est configuré pour fonctionner à une première fréquence et, lorsqu'il fonctionne en tant qu'étiquette RFID, est configuré pour fonctionner à une seconde fréquence différente de la première fréquence,
**caractérisé en ce que**
l'étiquette résonnante comporte une électrode (20) comportant une partie d'électrode en ligne en spirale (22) et une partie d'électrode de capacité (24, 25) formées sur l'embase (21) et définissant un circuit résonnant LC possédant une fréquence résonnante à la première fréquence ;
l'étiquette RFID comporte une antenne dipôle fonctionnant à la seconde fréquence, l'antenne dipôle comportant l'électrode (20) définissant la première électrode dipôle et une électrode rayonnante (33) formée sur l'embase (21) et définissant la seconde électrode dipôle ;
le circuit intégré sans fil (30 ; 31) et l'électrode rayonnante (33) sont disposés à l'extérieur du circuit résonnant LC ; et
le circuit intégré sans fil (30 ; 31) est relié électriquement ou couplé électromagnétiquement à l'électrode (20) et l'électrode rayonnante (33).

2. Dispositif à circuit intégré sans fil selon la revendication 1, comportant en outre
une électrode en ligne d'intersection (25) prévue sur l'embase (21), l'électrode en ligne d'intersection (25) reliant une première électrode de capacité (25) opposée à une seconde électrode de capacité (24) reliée à une extrémité circonférentielle interne de la partie d'électrode en ligne en spirale (22) et à une extrémité circonférentielle externe de la partie d'électrode en ligne en spirale (22), où
la partie d'électrode de capacité comprend les première et seconde électrodes de capacité (25, 24) opposées l'une à l'autre dans la direction de l'épaisseur avec une couche diélectrique entre elles,
la partie d'électrode en ligne en spirale (22) tourne autour de la partie d'électrode de capacité (24, 25) plusieurs fois, et
le circuit intégré sans fil (30 ; 31) est monté près de l'électrode en ligne d'intersection.

3. Dispositif à circuit intégré sans fil selon la revendication 1, dans lequel la partie d'électrode de capacité comprend deux électrodes de capacité (24, 25) opposées l'une à l'autre dans la direction de l'épaisseur avec une couche diélectrique entre elles, et
le circuit intégré sans fil (30 ; 31) est monté près de l'une des deux électrodes de capacité (24, 25).

4. Dispositif à circuit intégré sans fil selon la revendication 1, dans lequel
la partie d'électrode de capacité (24, 25) est disposée à l'intérieur de la partie d'électrode en ligne en spirale (22), et
l'électrode rayonnante (33) est disposée à l'extérieur de la partie d'électrode en ligne en spirale (22).

5. Dispositif à circuit intégré sans fil selon la revendication 4, dans lequel
une longueur en ligne de l'électrode rayonnante (33) correspond à approximativement 1/4 de longueur d'onde à la fréquence pour RFID.

6. Dispositif à circuit intégré sans fil selon l'une quelconque des revendications 1 et 5, dans lequel
le circuit intégré sans fil est un module couplé électromagnétiquement (30) comprenant un substrat de circuit d'alimentation (32) et une puce de circuit intégré sans fil (34), le substrat de circuit d'alimentation (32) étant muni d'un circuit d'adaptation comprenant un inducteur (13a, 13b), la puce à circuit intégré sans fil (34) étant montée sur une surface supérieure du substrat de circuit d'alimentation (32), la puce de circuit intégré sans fil (34) étant électriquement reliée au circuit d'alimentation.
